# EUROPEAN PATENT APPLICATION

(11) **EP 3 808 211 A1**
(43) Date of publication of application: **21.04.2021**
(21) Application number: 20201685.3
(22) Date of filing: 14.10.2020
(51) Int. Cl.: A46B 5/00, B25G 1/00, F16B 7/18, A47L 13/022, A47L 13/20

(54) **IMPROVED MODULAR TUBE**

(30) Priority: 14.10.2019 IT 201900003638 U
(71) Applicant: Fimm Italia S.p.A., 50050 Stabbia - Cerreto Guidi (FI) (IT)
(72) Inventor: SPINELLI, Enrico, 51036 Larciano (PT) (IT)
(74) Representative: Iannone, Carlo Luigi

(57) **Abstract**

The present invention relates to an improved modular tube (10) comprising at least two tubular elements (1, 2), of which one first tubular element (1) and one second tubular element (2), said first tubular element (1) comprising a tapered end (3) and said second tubular element (2) comprising a hollow end (4), said hollow end (4) being complimentary to said tapering (3), said modular tube (10) being characterized in that it comprises a male (5) or female (6) threaded coupling element arranged on said tapering (3) of said first tubular element (1) and a corresponding female (6) or male (5) threaded coupling element at said cavity (4) of said second tubular element (2).

## Description

The present invention relates to an improved modular tube, in particular to be used in broom handles and other tools requiring tubular handles, as well as to be used in any other application that might require tubular elements to be combined.

The spread of the internet has brought about the development of websites for the online purchase of any type of object, often involving lower costs and the advantage of receiving the purchased object directly at home. Such system is extended to any type of object, ranging from home and housekeeping accessories to furniture.

However, in order to reduce as much as possible the shipping costs it is required to reduce to the minimum the size of the items to be shipped. Therefore objects are shipped in non-assembled pieces, which will then be assembled by the purchasers once received.

An example is represented by tubular elements that can be used for various applications, such as broom handles or else. Often they are relatively light objects, which is advantageous for the shipment making it simple and cheap. However their length extension leads a remarkable increase in such cost, which often does not compensate with the cost of the object itself.

The advantages of modular products are not only experienced in online sales, but also in sales inside shops; a non-assembled product to be combined by the purchaser allows to save precious space on shelves, as well as in warehouses, improving the sale yield and storage costs.

Modular tubular elements of different types were thus created in order to be assembled by users once received. An example is set forth in the utility model patent RM2002U000042, wherein a male-female coupling between two portions of a broom handle is disclosed that is obtained by tapering an end of one of such portions and forming a cavity inside an end of another portion, so that the inner diameter of the female portion is equal to the outer diameter of the male end. The tapering may be smooth (in case of tubes made of easily deformable material such as aluminium or mild steel) or undulating as desired and indeed the only possible method for hardly-deformable crude steel tubes as normally used for broom handles.

However such coupling has some drawbacks such as the fact that it requires a certain forcing to obtain a stable connection. Furthermore once assembled, the handle obtained cannot be disassembled without specific means, that cannot be implemented by the average user. In fact, online sales do not only require a simple product to be shipped, but also to be returned back once tested, in case it does not please the purchaser.

Still in the application of the tubular handles, in order to cope with the difficulty of forming a solid coupling, modular tubular components were also created that can be coupled by adding plastic male-female elements at the ends of the tapered portion and of the hollow portion. In that case the coupling is based on a male element that is adapted to form a locking by expanding once fitted into a respective female element. However, such types of modular handles exploit the coupling of such plastic elements, and are thus less strong and solid, despite they are easier to combine.

The main object of the present invention consists in making an improved modular tube that overcomes the above mentioned technical problem, solve the drawbacks and overcomes the limits of the prior art granting stability once mounted and that is capable at the same time of being disassembled.

Within the scope of this task, an object of the present invention is to make an improved modular tube that can be easily combined.

A further object of the invention consists in realizing an improved modular tube that is capable of providing the broadest guarantees of reliability and safety when used.

Another object of the invention consists in realizing an improved modular tube that is easy to make and economically competitive when compared with the prior art.

The above mentioned task, as well as the mentioned objects and others that will appear hereinafter, are reached by an improved modular tuber as disclosed in claim 1.

Other features are comprised in the dependent claims.

Further characteristics and advantages will result from the description of a preferred, though non-limiting, embodiment of an improved modular tube, illustrated for exemplary and non-limiting purposes by means of the enclosed drawings wherein:

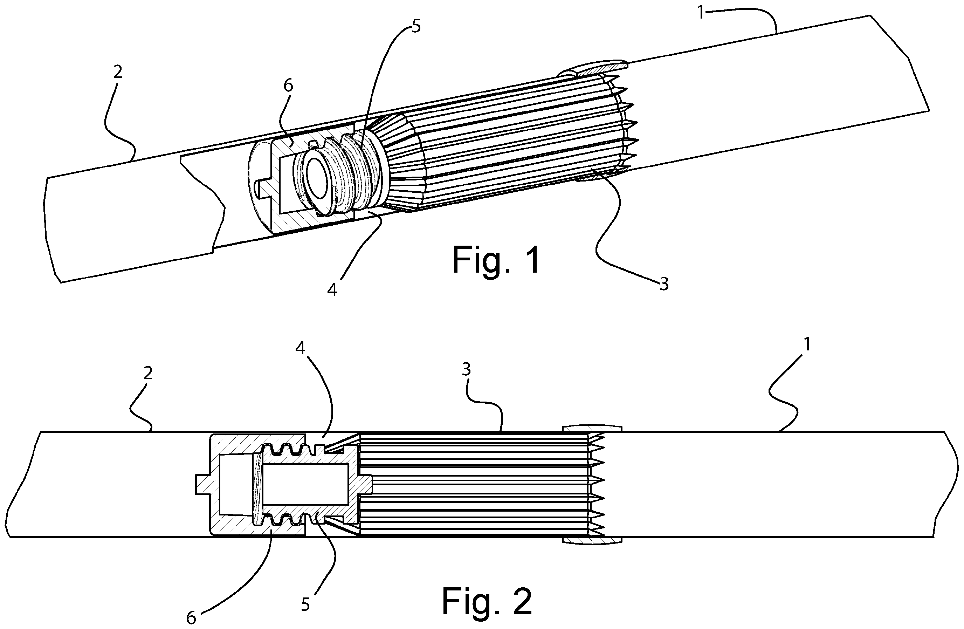

- figure 1 is a perspective semi-transparent view from above of an embodiment of an improved modular tube, according to the invention;
- figure 2 is a semi-transparent side view of an embodiment of the improved modular tube of figure 1;

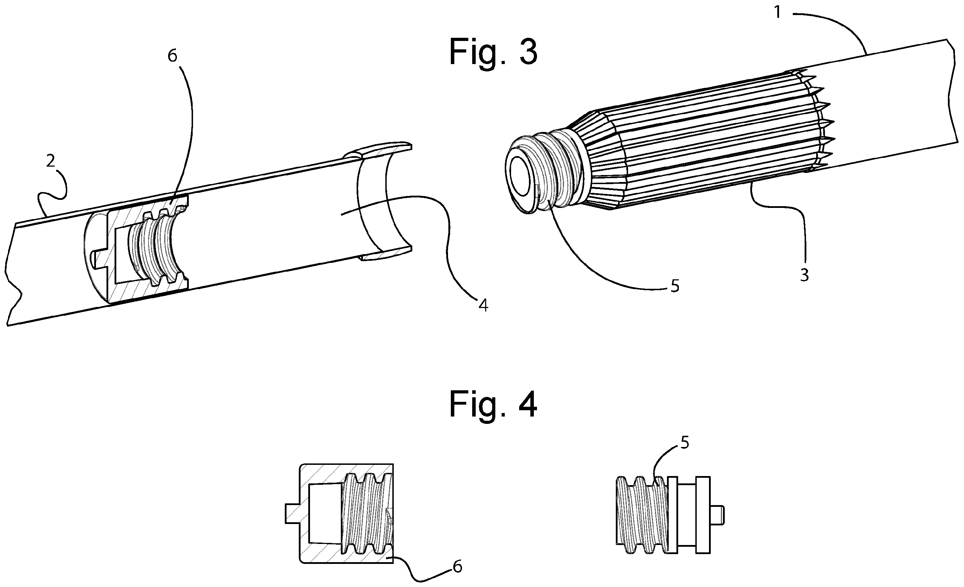

- figure 3 is a semi-transparent perspective exploded view from above of an embodiment of an improved modular tube of figure 1;
- figure 4 is a detailed view of the components of a male-female coupling of the tube of figure 1.

With reference to the mentioned figures, the improved modular tube, indicated as a whole with reference number 10, comprises at least two tubular elements 1, 2, of which a first tubular element 1 and a second tubular element 2. I

In particular, the first tubular element 1 comprises a tapered end 3 and the second tubular element 2 comprises a hollow end 4, such that such hollow end 4 is complementary to the tapering 3.

Such configuration enables to form a solid interlocking coupling.

According to the present invention the modular tube 10 comprises a male 5 or female 6 threaded coupling element arranged on the tapering 3 of the first tubular element 1 and a corresponding female 6 or male 5 threaded coupling element at the cavity 4 of the second tubular element 2.

Adding such male-female coupling elements 5, 6 allows to reduce the force required to obtain a solid coupling of the two tubular elements, with no need to deform the materials thereof, guaranteeing at the same time a solid and removable coupling and making the last assembling step extremely easy such that the connection will be stable and rigid by simply tightening the screw. Furthermore, if the handle is normally used it remains stably assembled, but in case the user wishes to disassemble it he only needs to perform the opposite operation, i.e. unscrew the male 5 and female 6 coupling elements from each other and the pieces will easily separate with the possibility of repeating the operation even several times.

In the embodiment of the enclosed figures, the male 5 coupling element is arranged at the tapering end 3 of the first tubular element 1, and the female coupling element 6 is arranged inside the cavity 4 of the second tubular element.

An alternative embodiment provides that the female coupling element 6 is arranged at the tapering end 3 and the male coupling element 5 is arranged inside the cavity 4.

Advantageously, the tapering 3 of the first tubular element 1 has an undulating cross section. Alternatively, the tapering 3 has a smooth cross section. In particular, the tubular elements 1, 2 are made of metal material while male 5 and female 6 coupling elements are made of plastic material.

For instance, tubular elements may be in aluminium or steel.

A broom handle comprising an improved modular tube 10 as described is also part of the present invention.

A further possible use of the improved modular tube is for forming a sectional tubular element, for instance for composing furniture pieces or else.

The operation of the improved modular tube is clear and apparent from what described.

It was ascertained in practice that the improved modular tube, according to the present invention, meets the task as well as the set objects as it allows to make a simultaneously simple and strong, and reversible coupling.

The improved modular tube thus conceived can undergo several modifications and variants all within the scope of the inventive concept.

Furthermore, all the details may be replaced by other equally useful elements.

In practice, any materials can be used according to requirements, as long as they are compatible with the specific use, the dimensions and the contingent shapes. The present invention was described by way of illustrative, non-limiting example according to preferred embodiments thereof, but it is understood that variations and/or modifications may be made by a person skilled in the art, without departing from the relative scope of protection, as defined in the appended claims.

## Claims

1. An improved modular tube (10) comprising at least two tubular elements (1, 2), of which one first tubular element (1) and one second tubular element (2), said first tubular element (1) comprising a tapered end (3) and said second tubular element (2) comprising a hollow end (4), said hollow end (4) being complimentary to said tapering (3), said modular tube (10) being **characterized in that** it comprises a male (5) or female (6) threaded coupling element arranged on said tapering (3) of said first tubular element (1) and a corresponding female (6) or male (5) threaded coupling element at said cavity (4) of said second tubular element (2).

2. The improved modular tube (10) according to claim 1, wherein said male coupling element (5) is arranged at the end of said tapering (3) of said first tubular element (1) and said female coupling element (6) is arranged inside said cavity (4) of said second tubular element (2).

3. The improved modular tube (10) according to claim 1, wherein said female coupling element (6) is arranged at the end of said tapering (3) of said first tubular element (1) and said male coupling element (5) is arranged inside said cavity (4) of said second tubular element (2).

4. The improved modular tube (10) according to one of the preceding claims, wherein said tapering (3) has an undulated cross section.

5. The improved modular tube (10) according to one of the preceding claims, wherein said tapering (3) has a smooth cross section.

6. The improved modular tube (10) according to one of the preceding claims, wherein said tubular elements (1, 2) are made of metal material and said male coupling elements (5) and said female coupling element (6) are made of plastic material.

7. A broom handle comprising an improved modular tube (10) according to one of the preceding claims.

8. A sectional tubular element comprising at least an improved modular tube (10) according to one of the preceding claims.
